# EUROPEAN PATENT APPLICATION

(11) **EP 2 472 994 A1**
(43) Date of publication of application: **04.07.2012**
(21) Application number: 09848604.6
(22) Date of filing: 25.08.2009
(51) Int. Cl.: H04W 88/00

(54) **DATA COMMUNICATION METHOD, DATA COMMUNICATION SYSTEM AND DEVICES THEREOF**

(71) Applicant: Huawei Technologies Co., Ltd., Shenzhen, Guangdong 518129 (CN)
(72) Inventor: XU, Enqi, Shenzhen Guangdong 518129 (CN)
(74) Representative: Isarpatent
(86) International application number: PCT/CN2009/073482
(87) International publication number: WO 2011/022872

(57) **Abstract**

A data communication method, a data communication system, and relevant devices are disclosed to reduce the size of a base station and optimize the network structure. The data communication method includes that: through an antenna, a base station receives a signal sent by a mobile terminal; the base station performs intermediate frequency processing, radio frequency processing and baseband processing for the signal to obtain digital information; the base station encapsulates the digital information to obtain encapsulated information; the base station performs physical-layer interface adaptation for the encapsulated information to obtain transmission information; and the base station sends the transmission information to a first centralized processing device of a network so that the centralized processing device performs network service protocol processing for the transmission information. A data communication system and relevant devices are also provided herein.

## Description

### FIELD OF THE INVENTION

The present invention relates to the communication field, and in particular, to a data communication method, a data communication system, and relevant devices.

### BACKGROUND OF THE INVENTION

With development of radio network technologies, users and services that access the radio network are increasing, which imposes very high requirements on the processing capability of a base station.

In the prior art, the base station needs to carry out complicated procedures. With development of the network, the procedures keep changing, and new services keep emerging, which makes the implementation of the base station too complicated.

Secondly, with enhancement of services, bandwidth demand of users keeps increasing, and the base station needs to be nearer to users. Therefore, the number of base stations increases massively, and the operation, maintenance and management of the network become very complicated.

Thirdly, complicated service processing on the base station requires high processing capability, so that more modules or boards need to be added on the base station to ensure the processing capability of the base station, which increases the size of the base station and goes against the trend of base station miniaturization.

### SUMMARY OF THE INVENTION

An embodiment of the present invention provides a data communication method, a data communication system, and relevant devices, which can lower performance requirements on the base station and reduce the size of a base station and optimize the network structure.

A data communication method provided in an embodiment of the present invention includes: receiving, by a base station through an antenna, a signal sent by a mobile terminal; performing, by the base station, intermediate frequency processing, radio frequency processing and baseband processing for the signal to obtain digital information; encapsulating, by the base station, the digital information to obtain encapsulated information; performing, by the base station, physical-layer interface adaptation for the encapsulated information to obtain transmission information; sending, by the base station, the transmission information to a first centralized processing device of a network so that the centralized processing device performs network service protocol processing for the transmission information; and/or receiving, by the base station, the transmission information from the first centralized processing device of the network, where the transmission information has undergone the network service protocol processing; decapsulating, by the base station, the transmission information to obtain digital information; performing, by the base station, baseband processing, intermediate frequency processing, and radio frequency processing for the digital information to obtain a signal; and sending the signal to the mobile terminal through the antenna.

A data communication method provided in an embodiment of the present invention includes: receiving, by a first centralized processing device, transmission information sent by a base station; performing, by the first centralized processing device, network service protocol processing for the transmission information; sending, by the first centralized processing device, the information to a network side, where the information has undergone the network service protocol processing; and/or receiving, by the first centralized processing device, information sent by the network side; performing the network service protocol processing for the information; sending, by the first centralized processing device, the transmission information to the base station, where the transmission information that has undergone the network service protocol processing.

A data communication system provided in an embodiment of the present invention includes: a base station, configured to: receive, through an antenna, a signal sent by a mobile terminal, perform intermediate frequency processing, radio frequency processing and baseband processing for the signal to obtain digital information, encapsulate the digital information to obtain encapsulated information, perform physical-layer interface adaptation for the encapsulated information to obtain transmission information, and send the transmission information to a first centralized processing device of a network; and/or receive the transmission information from the first centralized processing device, where the transmission information has undergone the network service protocol processing, decapsulate the transmission information to obtain digital information, perform baseband processing, intermediate frequency processing, and radio frequency processing for the digital information to obtain a signal, and send the signal to the mobile terminal through the antenna; and the first centralized processing device, configured to: receive the transmission information sent by the base station, perform network service protocol processing for the transmission information, and send the information, which has undergone the network service protocol processing, to the network side; and/or receive the information sent by the network side, perform the network service protocol processing for the information, and send the transmission information, which has undergone the network service protocol processing, to the base station.

A base station provided in an embodiment of the present invention includes: an antenna, configured to receive a signal sent by a mobile terminal; an intermediate-frequency, radio-frequency and baseband processing module, configured to perform intermediate frequency processing, radio frequency processing and baseband processing for the signal to obtain digital information; an encapsulating module, configured to encapsulate the digital information to obtain encapsulated information; and an adapting module, configured to perform physical-layer interface adaptation for the encapsulated information to obtain transmission information, and send the transmission information to a first centralized processing device of a network so that the centralized processing device performs network service protocol processing for the transmission information.

A base station provided in an embodiment of the present invention includes: a transmission module, configured to receive transmission information from a first centralized processing device of a network, where the transmission information has undergone network service protocol processing; an encapsulating module, configured to decapsulate the transmission information, which has undergone the network service protocol processing, to obtain digital information; an intermediate-frequency, radio-frequency and baseband processing module, configured to perform baseband processing, intermediate frequency processing, and radio frequency processing for the digital information to obtain a signal; and an antenna, configured to send the signal to a mobile terminal.

A network device provided in an embodiment of the present invention includes: a receiving module, configured to receive transmission information sent by a base station, where the transmission information is obtained through physical-layer interface adaptation performed by the base station, a protocol processing module, configured to perform network service protocol processing for the transmission information, and a sending module, configured to send the information, which has undergone the network service protocol processing, to a network side; or a receiving module, configured to receive information sent by the network side, a protocol processing module, configured to perform network service protocol processing for the information, and a sending module, configured to send the transmission information, which has undergone the network service protocol processing, to the base station.

In the embodiments of the present invention, after receiving a signal, the base station performs intermediate frequency processing, radio frequency processing and baseband processing for the signal, performs simple encapsulation processing for the data, performs physical-layer interface adaptation for the data, and then sends the data to the network device for network service protocol processing. Therefore, in the embodiments of the present invention, the functions that occupy base station resources, such as network service protocol processing, are processed by the centralized processing unit of the network instead, and the base station handles only the intermediate frequency processing, radio frequency processing, baseband processing, and the most basic interface information, so the burden of the base station is relieved, which thereby can lower performance requirements on the base station, lower the complexity, reduce the size of the base station, and optimize the network structure.

### BRIEF DESCRIPTION OF THE DRAWINGS

FIG. 1 is a schematic diagram of an embodiment of a data communication method according to embodiments of the present invention;
FIG. 2 is structural diagram of a base station with functions reduced according to an embodiment of the present invention;
FIG. 3 is a schematic diagram of another embodiment of a data communication method according to embodiments of the present invention;
FIG. 4 is a structural diagram of a centralized processing device according to an embodiment of the present invention;
FIG. 5 is another structural diagram of a centralized processing device according to an embodiment of the present invention;
FIG. 6 is a schematic diagram of a data communication system according to an embodiment of the present invention;
FIG. 7 is a schematic diagram of a base station according to an embodiment of the present invention; and
FIG. 8 is a schematic diagram of a centralized processing device according to an embodiment of the present invention.

### DETAILED DESCRIPTION OF THE EMBODIMENTS

An embodiment of the present invention provides a data communication method, a data communication system, and relevant devices, which are used to lower performance requirements on the base station and reduce the size of a base station and optimize the network structure.

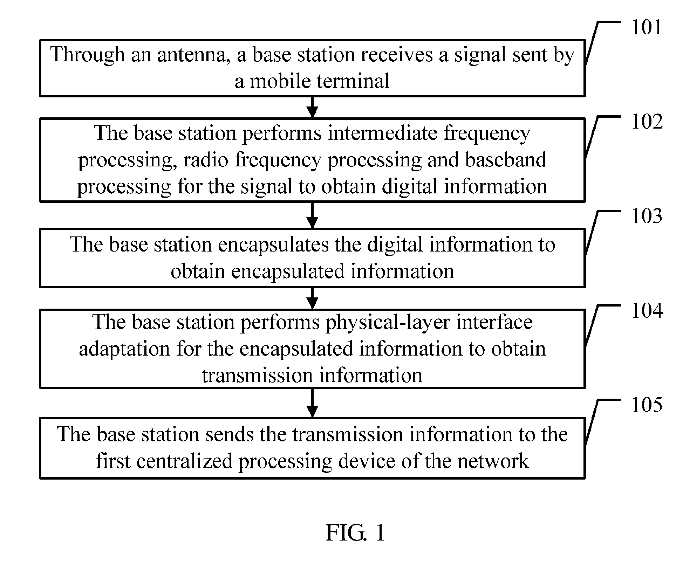

Referring to FIG. 1, an embodiment of a data communication method according to embodiments of the present invention includes:
101: Through an antenna, a base station receives a signal sent by a mobile terminal.

When the mobile terminal needs to send data, data to be sent is converted into a signal inside the mobile terminal, and the signal is sent through the antenna of the mobile terminal to the base station in a cell in which the mobile terminal is located.
102: The base station performs intermediate frequency processing, radio frequency processing and baseband processing for the signal to obtain digital information.

The bandwidth of a signal code chip received by the base station is generally great. To reduce the bandwidth occupied in the transmission process, the base station performs baseband processing for the received signal code chip to obtain digital information of smaller bandwidth.

In this embodiment, the processes of intermediate frequency processing, radio frequency processing, and baseband processing are common knowledge to persons skilled in the art, and are not limited herein.
103: The base station encapsulates the digital information to obtain encapsulated information.

After obtaining the digital information, the base station encapsulates the digital information directly. The encapsulated information obtained after encapsulation includes the digital information.

The encapsulated information may further include an identifier of the base station, an identifier of the digital information, and clock information (such as the 1588 clock information).

Encapsulating in this embodiment refers to encapsulating digital information into an IP packet, and the IP packet includes the identifier of the base station, the identifier of the digital information, and clock information.

It should be noted that the encapsulation process is common knowledge to persons skilled in the art, and the type of the generated data packet is related to the protocol applied in the encapsulation, which are not limited herein.
104: The base station performs physical-layer interface adaptation for the encapsulated information to obtain transmission information.

In this embodiment, the base station encapsulates the digital information to obtain the encapsulated information, and then performs the interface adaptation for the encapsulated information according to the physical layer, so as to obtain transmission information.

The adaptation in this embodiment may be: The base station performs physical-layer interface adaptation for the encapsulated information to obtain E1 interface transmission information, or fast Ethernet (FE, Fast Ethernet) interface transmission information, or Asymmetric Digital Subscriber Line (ADSL, Asymmetric Digital Subscriber Line) interface transmission information, or passive optical network (PON, Passive Optical Network) interface transmission information.

It should be noted that the E1 interface, FE interface, ADSL interface, and PON interface are only examples for illustration in this embodiment; it can be understood that, in practical applications, the specific physical-layer interface may be other types of interfaces and is not limited herein.
105: The base station sends the transmission information to a centralized processing device of the network so that the centralized processing device performs network service protocol processing for the transmission information.

In this embodiment, after obtaining the transmission information through physical-layer interface adaptation for the encapsulated information, the base station directly sends the transmission information to the first centralized processing device of the network so that the centralized processing device performs network service protocol processing for the transmission information. The base station itself performs the most simple and most basic functions of packet encapsulation processing and interface adaptation.

In this embodiment, the first centralized processing device may communicate with multiple base stations, and perform network service protocol processing for the transmission information sent by all base stations. That is, the network service protocol processing may not be performed inside each base station, but is performed by the first centralized processing device instead.

The first centralized processing device in this embodiment may be a device such as a broadband remote access server (BRAS, Broadband Remote Access Server), metropolitan area Ethernet network element, optical line terminal (OLT, Optical Line Terminal), multiple services transition platform (MSTP, Multiple services transition platform) or broadband access device, integrated access device, digital subscriber line access multiplexer (DSLAM, Digital Subscriber Line Access Multiplexer), or multiservice access node (MSAN, Multiservice Access Node). It should be noted that the first centralized processing device performs, according to the transmission information sent by the base station, network service protocol processing, which may specifically be implemented by an existing module in the first centralized processing device. Alternatively, a new board is added onto the first centralized processing device and is dedicated to perform network service protocol processing.

It should be noted that in this embodiment, the network service protocol processing includes processing of protocols on the data link layer, network layer, transmission layer, session layer, representation layer, and application layer, that is, processing of protocols on six layers other than the application layer. Specifically, the processing includes interface protocol adaptation, data encapsulation, decapsulation, and data transmission, or other processing types. The specific network service protocol processing is common knowledge to persons skilled in the art, and is not limited herein.

In the prior art, the network service protocol processing in the base station may be implemented through software programming, or implemented through hardware programming (adding a dedicated board for performing network service protocol processing in the base station). In this embodiment, when the first centralized processing device performs the network service protocol processing, the implementation manner of software programming or hardware programming may also be adopted.

If the first centralized processing device adopts the manner of hardware programming, a dedicated board for network service protocol processing may also be added or deleted in the first centralized processing device. The specific implementation manner of the board is similar to the implementation manner of the board that is used in the base station and is dedicated to perform network service protocol processing in the prior art, and is common knowledge to persons skilled in the art.

If the first centralized processing device adopts the manner of software programming, a board compliant with conditions may be found in existing boards of the first centralized processing device first. The specific conditions may be: high processing capability, and/or many idle resources, and/or multi-thread processing capability. Afterward, a relevant software program of network service protocol processing is imported into a storage module of the board. Therefore, the processor of the board (or the processor of the first centralized processing device) can invoke the relevant software program of network service protocol processing, so as to complete the process of the network service protocol processing. The software program is similar to the software program in the base station in the prior art, and is common knowledge to persons skilled in the art.

The first centralized processing device in this embodiment is not limited to the network elements mentioned above. In practical applications, the first centralized processing device may be other types of network elements, and is not limited herein. In addition, in practical applications, the first centralized processing device in this embodiment may be integrated with a gateway general packet radio service supporting node (GGSN, Gateway General Packet Radio Service Supporting Node).

Only the unidirectional data transmission process of the base station is described above. It should be noted that in practical applications, the base station generally performs bidirectional data transmission, that is, data transmission from a mobile terminal to a network side and data transmission from the network side to the mobile terminal. The two transmission processes are inverse processes to each other. Illustrated above is data transmission from the mobile terminal to the network side, and the data transmission process from the network side to the mobile terminal may be:
(1) The base station receives the transmission information from the first centralized processing device of the network, where the transmission information has undergone the network service protocol processing.
   When the network side needs to send data to the mobile terminal, the network sends the data to the first centralized processing device first.
   After receiving the data, the first centralized processing device may perform network service protocol processing, and send the processed transmission information to the base station.
(2) The base station decapsulates the transmission information to obtain digital information.
(3) The base station performs baseband processing, intermediate frequency processing, and radio frequency processing for the digital information to obtain a signal.
(4) The base station sends the signal to the mobile terminal through the antenna.

In this embodiment, after receiving the signal from the mobile terminal, the base station performs intermediate frequency processing, radio frequency processing, baseband processing, encapsulation, and physical-layer interface adaptation for the signal, and sends the adapted information to the centralized processing device of the network, so that the centralized processing device performs network service protocol processing. Therefore, for the base station in the embodiment of the present invention, the function of network service protocol processing is processed by the centralized processing device of the network instead, so the burden of the base station is relieved, which thereby lowers performance requirements on the base station, reduces the size of the base station, and optimizes the network structure.

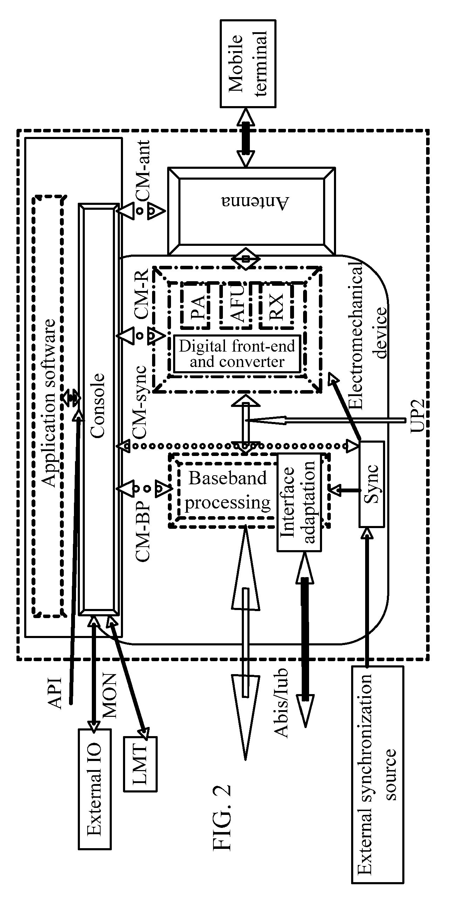

After the functions of the base station is reduced, the specific structure of base station is as shown in FIG. 2, where the network service protocol processing module in the base station is simplified, so that the performance requirements on the base station can be lowered, the size of the base station is reduced, and the network structure is optimized.

However, it should be noted that the complete network service protocol processing module may still be reserved in the base station to increase compatibility of the base station with the existing network. In practical applications, when the network can support the function simplification of the base station, the base station does not enable the network service protocol processing module; if the network cannot support the function simplification of the base station, the base station still may use the network service protocol processing module to perform network service protocol processing.

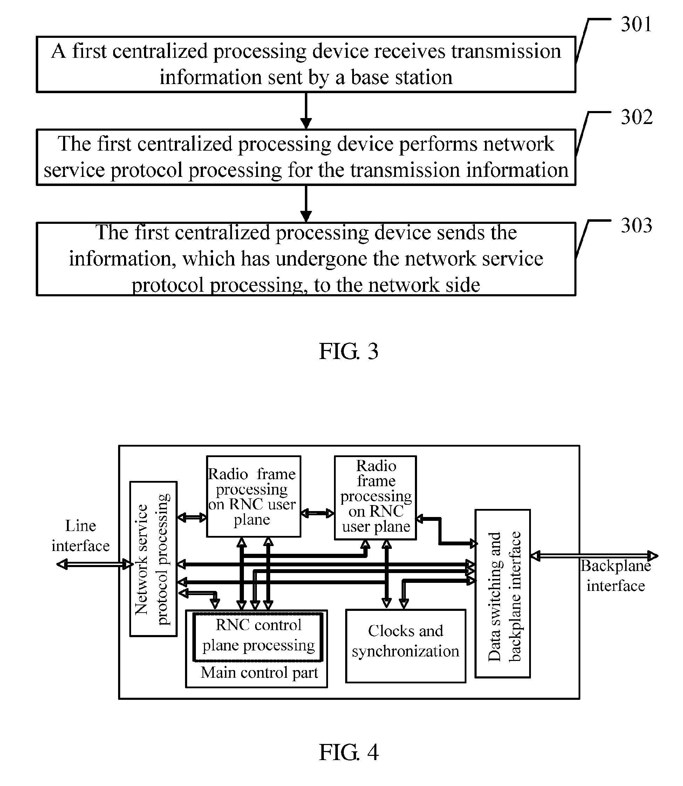

The following illustrates the data communication method in an embodiment of the present invention from the perspective of a centralized processing device. Referring to FIG. 3, another embodiment of a data communication method according to embodiments of the present invention includes:
301: A first centralized processing device receives transmission information sent by a base station.

In this embodiment, the first centralized processing device may receive transmission information from the base station. The transmission information is obtained through physical-layer interface adaptation performed by the base station, according to the procedure described in the preceding embodiment. Specifically, the physical-layer interface may be an E1 interface, an FE interface, an XDSL interface, or a PON interface, or may be other types of interfaces, which is not limited herein.
302: The first centralized processing device performs network service protocol processing for the transmission information.

After receiving the transmission information sent by the base station, the first centralized processing device may perform network service protocol processing for the transmission information, where the network service protocol processing may specifically includes processing of protocols on the data link layer, network layer, transmission layer, session layer, representation layer, and application layer, and include protocol conversion, adaptation, and encapsulation.

In this embodiment, the process that the first centralized processing device performs network service protocol processing is similar to the process that the base station performs network service protocol processing in the prior art, and is not repeated here.
303: The first centralized processing device sends the information, which has undergone the network service protocol processing, to the network side.

After completing the network service protocol processing for the transmission information, the first centralized processing device may send the processed information to the network side.

The first centralized processing device in this embodiment may be a BRAS, a metropolitan area Ethernet network element, an OLT or an MSTP, a broadband access device, a digital subscriber line access multiplexer, or a multiservice access node. It should be noted that the first centralized processing device performs, according to the information sent by the base station, network service protocol processing, which may specifically implemented by an existing unit in the first centralized processing device. That is, the function of network service protocol processing may be added to an existing board performing other functions in the first centralized processing device; or a new board is added onto the first centralized processing device and is dedicated to perform network service protocol processing. The specific implementation manner is the same as the processing manner described in step 105 in the embodiment shown in FIG. 2, and is not repeated here.

The first centralized processing device in this embodiment is not limited to the network elements mentioned above. In practical applications, the first centralized processing device may be other types of network elements, and is not limited herein. In addition, in practical applications, the first centralized processing device in this embodiment may be integrated with a GGSN.

Only the unidirectional data transmission process of the first centralized processing device in an embodiment of the present invention is described above. It should be noted that in practical applications, the first centralized processing device generally performs bidirectional data transmission, that is, data transmission from the base station to the network side and data transmission from the network side to the base station. The two transmission processes are inverse processes to each other. The transmission process illustrated above is data transmission from the base station to the network side, and the data transmission process from the network side to the base station may be:
(1) The first centralized processing device receives information sent by the network side.
   When the network side needs to send data to the base station, the network side sends the data to be sent to the first centralized processing device of the network first.
(2) The first centralized processing device performs the network service protocol processing for the information.
   After receiving the data, the first centralized processing device may perform network service protocol processing. Specifically, the network service protocol processing may be processing of protocols on the data link layer, network layer, transmission layer, session layer, representation layer, and application layer, and may include protocol conversion, adaptation, and encapsulation.
(3) The first centralized processing device sends the transmission information that has undergone the network service protocol processing to the base station.

In the embodiment of the present invention, the first centralized processing device may complete network service protocol processing in place of the base station. Therefore, the base station in the embodiment of the present invention may be responsible for only basic functions such as intermediate frequency processing, radio frequency processing, baseband processing, and the most basic interface information; and the function of network service protocol processing is mainly processed by the centralized processing device of the network instead, so the burden of the base station is relieved, which can thereby lower the performance requirements on the base station, reduce the size of the base station, and optimize the network structure.

It should be noted that in the foregoing embodiments, the network service protocol processing function is originally performed by the based station can be performed by the first centralized processing device instead; in practical applications, to further simplify the network elements and optimize the network structure, in this embodiment, the function of a radio network controller (RNC, Radio Network Controller) may also be performed by a second centralized processing device of the network instead, so that the processing capabilities of the centralized processing device are made full use of. In this embodiment, main functions of the RNC are to control service adaptation between the base station and a core network, control service isolation, and control service forwarding. All or part of the functions of the RNC may be performed by the second centralized processing device instead. In addition, in this embodiment, the functions of the RNC and the network service protocol processing function of the base station may be performed by a same centralized processing device of the network instead (that is, the first centralized processing device and the second centralized processing device are the same device). For example, all such functions are performed by a BRAS, a metropolitan area Ethernet network element, an OLT, or an MSTP instead. Meanwhile, the functions of the RNC and the network service protocol processing function of the base station may be performed by different centralized processing devices of the network instead (that is, the first centralized processing device and the second centralized processing device are different devices). For example, the functions of the RNC are performed by a BRAS instead, and therefore, the network service protocol processing function of the base station is performed by a metropolitan area Ethernet network element, an OLT or an MSTP or a broadband access device, or a DSLAM/MSAN instead.

For ease of understanding, the following describes how the functions of the RNC and the function of network service protocol processing are performed by the same centralized processing device instead. Referring to FIG. 4, FIG. 4 shows a centralized processing device that has the network service protocol processing function of the base station and all functions of the RNC integrated.

It should be noted that in this embodiment, no RNC is required in the network after the centralized processing device has the network service protocol processing function of the base station and all functions of the RNC integrated. That is, all functions of the RNC are performed by the centralized processing device instead. The RNC in the existing network mainly performs functions such as service adaptation between the base station and the core network, service isolation, and service forwarding, and, from the perspective of the data transmission, mainly handles user-plane and control-plane data processing processes. In this embodiment, the user-plane and control-plane data processing is performed by the centralized processing device instead, and the specific processing process is similar to the processing process performed by the RNC, and is not repeated here.

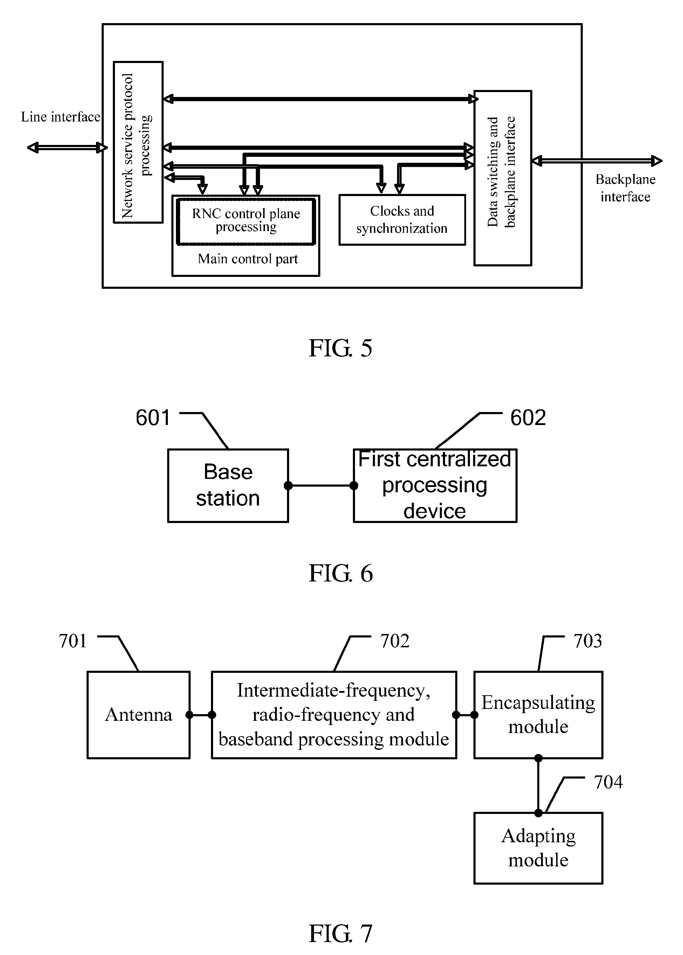

FIG. 5 shows a centralized processing device that has the network service protocol processing function of the base station and the control-plane data processing function of the RNC integrated.

It should be noted that in this embodiment, after the centralized processing device has the network service protocol processing function of the base station and the control-plane processing function of the RNC integrated, an RNC is still required in the network to perform user-plane data processing. In this embodiment, the process that the centralized processing device performs control-plane data processing is similar to the process that the RNC performs control-plane data processing, and is not repeated.

It can be understood that, the centralized processing device may also have only the network service protocol processing function integrated, without any function of the RNC integrated.

Multiple integration solutions are provided above. In practical applications, different solutions may be selected according to specific requirements.

In a solution in the prior art, the RNC and the base station process a part of services respectively, and the interfaces of the two is interconnected for completing all services jointly. The RNC is relatively independent from the network, so cannot obtain relevant resource information of the network, and is unable to control and allocate network resources in real time. For example, the hierarchical quality of service (HQoS, Hierarchical Quality of Service) allocation from the RNC to the base station cannot be implemented. Therefore, it is not ensured that the base station uses the network resources effectively. In this embodiment, all functions of the RNC can be performed by a centralized processing device (either the first centralized processing device or the second centralized processing device) instead, and the centralized processing device in practical applications is a BRAS, a metropolitan area Ethernet network element, an OLT, or an MSTP, a broadband access device, a digital subscriber line access multiplexer, or a multiservice access node. Therefore, relevant resource information in the network can be obtained, network resources can be controlled and allocated in real time, so that it is ensured that the base station uses the network resources effectively.

The following describes a data communication system provided in an embodiment of the present invention. Referring to FIG. 6, the data communication system in the embodiment of the present invention includes:
a base station 601, configured to: receive, through an antenna, a signal sent by a mobile terminal, perform intermediate frequency processing, radio frequency processing and baseband processing for the signal to obtain digital information, encapsulate the digital information to obtain encapsulated information, perform physical-layer interface adaptation for the encapsulated information to obtain transmission information, and send the transmission information to a first centralized processing device 602 of a network; and
the first centralized processing device 602, configured to perform network service protocol processing for the transmission information sent by the base station 601, and send the information, which has undergone the network service protocol processing, to the network side.

The data transmission direction of the data communication system described above is from the mobile terminal to the network side. The following describes a case in which the direction is from the network side to the mobile terminal. Still referring to FIG. 6, the data communication system in the embodiment of the present invention includes:
a first centralized processing device 602, configured to receive information sent by the network side, perform network service protocol processing for the information, and send the transmission information, which has undergone the network service protocol processing, to the base station 601; and
a base station 601, configured to: receive the transmission information, which has undergone the network service protocol processing, from the first centralized processing device 602, decapsulate the transmission information to obtain digital information, perform baseband processing, intermediate frequency processing, and radio frequency processing for the digital information to obtain a signal, and send the signal to the mobile terminal through an antenna.

The data communication system in this embodiment may further include a second centralized processing device, configured to control service adaptation between the base station and the core network, control service isolation, and control service forwarding. That is, the second centralized processing device has functions of the RNC integrated.

In this embodiment, the second centralized processing device and the first centralized processing device are a same device or different devices in the network.

The first centralized processing device is a BRAS, a metropolitan area Ethernet network element, an OLT or an MSTP, a broadband access device, an integrated access device, or a DSLAM/MSAN.

The second centralized processing device is a BRAS, a metropolitan area Ethernet network element, an OLT or an MSTP, a broadband access device, an integrated access device, or a DSLAM/MSAN.

For ease of understanding, the scenario in which the data is transmitted from the mobile terminal to the network side is taken for example to describe the data communication system according to the embodiment of the present invention.

When the mobile terminal needs to send data, the data to be sent is converted into a signal inside the mobile terminal, and the signal is sent through the antenna of the mobile terminal to the base station 601 in the cell in which the mobile terminal is located.

The bandwidth of the signal code chip received by the base station 601 is generally great. To reduce the bandwidth occupied in the transmission process, the base station performs baseband processing for the received signal code chip to obtain digital information of smaller bandwidth.

After obtaining the digital information, the base station 601 encapsulates the digital information directly. The encapsulated information includes the digital information, and may further include an identifier of the base station, an identifier of the digital information, and clock information (such as 1588 information).

After encapsulating the digital information to obtain encapsulated information, the base station 601 performs interface adaptation for the encapsulated information to obtain transmission information.

The base station 601 sends the transmission information to a first centralized processing device 602 of the network so that the centralized processing device 602 performs network service protocol processing for the transmission information.

In this embodiment, the first centralized processing device 602 may receive transmission information sent by the base station 601.

After receiving the transmission information sent by the base station 601, the first centralized processing device 602 may perform network service protocol processing for the transmission information, where the network service protocol processing specifically includes processing of protocols on the data link layer, network layer, transmission layer, session layer, representation layer, and application layer, and includes protocol conversion, adaptation, and encapsulation.

After completing the network service protocol processing for the transmission information, the first centralized processing device 602 may send the processed information to the network side.

In this embodiment, after receiving the signal from the mobile terminal, the base station 601 performs intermediate frequency processing, radio frequency processing and baseband processing for the signal, encapsulates the signal, performs physical-layer interface adaptation for the signal, and sends the adapted information to the centralized processing device of the network so that the centralized processing device performs network service protocol processing. Therefore, network service protocol processing of the base station according to the embodiment of the present invention is processed by the centralized processing device of the network instead, so the burden of the base station is relieved, which can lower performance requirements on the base station, reduce the size of the base station, and optimize the network structure.

The following illustrates a base station provided in an embodiment of the present invention. Referring to FIG. 7, the base station in the embodiment of the present invention includes:
an antenna 701, configured to receive a signal sent by a mobile terminal;
an intermediate-frequency, radio-frequency and baseband processing module 702, configured to perform intermediate frequency processing, radio frequency processing and baseband processing for the signal to obtain digital information, where
in practical applications, the intermediate-frequency radio-frequency and baseband processing module 702 in this embodiment may be implemented by an intermediate-frequency radio-frequency module and a baseband processing module; that is, the intermediate-frequency radio-frequency module and the baseband processing module may be integrated or independent from each other;
an encapsulating module 703, configured to encapsulate the digital information to obtain encapsulated information; and
an adapting module 704 is configured to perform physical-layer interface adaptation for the encapsulated information to obtain transmission information, and send the transmission information to a first centralized processing device so that the first centralized processing device performs network service protocol processing for the transmission information.

What is described above is data transmission from the mobile terminal to the network side. In practical applications, the base station may also transmit data from the network side to the mobile terminal. Therefore, the base station in this embodiment includes:
an encapsulating module 703, configured to decapsulate the transmission information, which has undergone the network service protocol processing, to obtain digital information;
an intermediate-frequency, radio-frequency and baseband processing module 702, configured to perform baseband processing, intermediate frequency processing, and radio frequency processing for the digital information to obtain a signal, where
in practical applications, the intermediate-frequency radio-frequency and baseband processing module 702 in this embodiment may be implemented by an intermediate-frequency radio-frequency module and a baseband processing module; that is, the intermediate-frequency radio-frequency module and the baseband processing module may be integrated or independent from each other; and
an antenna 701, configured to send the signal to the mobile terminal.

In this embodiment, after the antenna 701 receives the signal from the mobile terminal, the intermediate-frequency, radio-frequency and baseband processing module 702 performs intermediate frequency processing, radio frequency processing and baseband processing for the signal to obtain digital information, the encapsulating module 703 encapsulates the digital information, the adapting module 704 performs physical-layer interface adaptation for the signal, and sends the adapted information to the centralized processing device of the network so that the centralized processing device performs network service protocol processing. Therefore, the function of network service protocol processing of the base station according to the embodiment of the present invention is processed by the centralized processing device of the network instead, so the burden of the base station is relieved, which can lower performance requirements on the base station, reduce the size of the base station, and optimize the network structure.

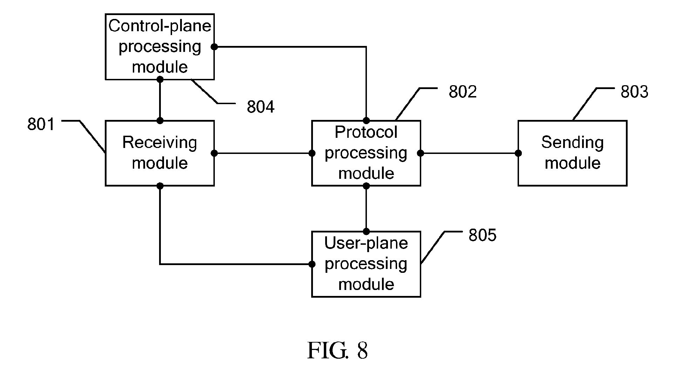

The following illustrates a network device embodiment in the embodiments of the present invention. Referring to FIG. 8, the network device in an embodiment of the present invention includes:
a receiving module 801, configured to receive transmission information sent by a base station, where the transmission information is generated by the base station;
a protocol processing module 802, configured to perform network service protocol processing for the transmission information, where
in this embodiment, the operations performed by the protocol processing module 802 may include processing of protocols on the data link layer, network layer, transmission layer, session layer, representation layer, and application layer, and may include protocol conversion, adaptation, and encapsulation; and
a sending module 803, configured to send the information, which has undergone the network service protocol processing, to the network side.

What is described above is data transmission from the base station to the network side. In practical application, the network device may also transmit data from the network side to the base station. Therefore, the network device in this embodiment includes:
a receiving module 801, configured to receive information sent by the network side;
a protocol processing module 802, configured to perform network service protocol processing for the information, where
in this embodiment, the operations performed by the protocol processing module 802 may include processing of protocols on the data link layer, network layer, transmission layer, session layer, representation layer, and application layer, and may include protocol conversion, adaptation, and encapsulation; and
a sending module 803, configured to send the transmission information, which has undergone the network service protocol processing, to the base station.

In practical applications, the network device in this embodiment may further have all or part of functions of an RNC integrated. Therefore, the network device in this embodiment may further include:
a control-plane processing module 804, and/or a user-plane processing module 805.

The control-plane processing module 804 is configured to perform RNC control-plane processing for the information that is received by the receiving module 801 and sent by the network side, or for the transmission information sent by the base station.

The user-plane processing module 805 is configured to perform RNC user-plane processing for the information that is received by the receiving module 801 and sent by the network side, or for the transmission information sent by the base station.

In this embodiment, the specific process of RNC control-plane processing and the specific process of RNC user-plane processing are similar to the processes performed by the RNC, and are not repeated here.

The network device in this embodiment may be a centralized processing device. In practical applications, the network device may be a BRAS, a metropolitan area Ethernet network element, an OLT or an MSTP, a broadband access device, an integrated access device, or a DSLAM/MSAN, or may be other types of network devices, which is not limited here.

In this embodiment, the protocol processing module 802 in the network device may perform most network service protocol processing in place of the base station. Therefore, the network service protocol processing part of the base station according to the embodiment of the present invention is implemented by the centralized processing device of the network instead, so the burden of the base station is relieved, which can lower the performance requirements on the base station, reduce the size of the base station, and optimize the network structure.

In this embodiment, the control-plane processing module 804 and/or the user-plane processing module 805 in the network device may fulfill all or part of functions of the RNC instead, which relieves the burden of the RNC. When the network device takes over all functions of the RNC, no RNC is required, and the network structure is optimized.

The foregoing embodiments bring the following benefits:
1. The functions of the base station are simplified, a base station has a larger capacity, and the number of required base stations is reduced, so that the number of nodes is reduced greatly, and the network structure is optimized;
2. With simplified functions of the base station, soft handover can be more efficient, and the handover between base stations is simpler and faster;
3. A simpler base station helps to reduce the size of the base station, which facilitates the base station to combine with a radio remote unit (RRU, Radio Remote Unit) in the future;
4. In solutions of the prior art, the RNC and the base station process a part of services respectively, and the interfaces of the two are interconnected to complete all services jointly; the RNC is relatively independent from the network, and cannot to control and allocate resources of the network in real time, for example, unable to allocate the HQoS from the RNC to the base station. Therefore, it is not ensured that the base station use the network resources effectively. In this embodiment, all functions of the RNC may be performed by a second centralized processing device of the network instead, so that the real-time control and allocation of resources of the network can be performed and it is ensured that the base station use the network resources effectively;
5. The centralized processing unit has a much greater board area than the base station, and higher processing capability than the base station, and can work in a manner of a resource pool that supports higher processing capabilities. Therefore, the probability of replacing or upgrading the board due to service upgrade or deficient processing capability of the base station is reduced, the user investment is protected, and the maintenance expense is lowered.
6. In this embodiment, after the centralized processing device performs the network service protocol processing, when the service interface needs to be adjusted due to upgrade of the network service, it is necessary only to adjust the service interface of the centralized processing device, but not necessary to adjust the interface of the base station, which prevents the problem of complicated service interfaces between the base station and the network device and the problem of high overhead;
7. With progress of technologies, a chip has higher processing capabilities and a higher capacity. With services being processed on an independent centralized service processing unit, the efficiency of using resources is improved significantly; and
8. If services are processed on the base station, if requirements change and cannot be met in the future, a board may need to be replaced, which may results in replacement of many boards of the base station increases costs, especially, maintenance and operation costs. The replacement of the boards of the base station involves a huge amount of work due to wide distribution of base stations. However, the centralized service processing unit generally enhances the service capability by adding only one service processing board, without the need of frequent replacement, where the number is much less than that in the case of the base station, and the replacement is completed only in the central equipment room, which reduces the amount of work and costs significantly.

Persons of ordinary skill in the art should understand that all or a part of the steps of the method in the embodiments of the present invention may be implemented by a program instructing relevant hardware. The program may be stored in a computer readable storage medium. The storage media may be a read-only memory, a magnetic disk, or an optical disk.

The detailed description above is about a data communication method, a data communication system, and relevant devices provided in an embodiment of the present invention. According to the ideas of the present invention, those skilled in the art can make modifications and variations in terms of specific implementation manners and application scopes. Therefore, the content of this specification shall not be construed as a limitation of the present invention.

## Claims

1. A data communication method, comprising:
receiving, by a base station through an antenna, a signal sent by a mobile terminal;
performing, by a base station, intermediate frequency processing, radio frequency processing and baseband processing for the signal to obtain digital information;
encapsulating, by a base station, the digital information to obtain encapsulated information;
performing, by a base station, physical-layer interface adaptation for the encapsulated information to obtain transmission information;
sending, by a base station, the transmission information to a first centralized processing device of a network so that the centralized processing device performs network service protocol processing for the transmission information;
and/or,
receiving, by a base station, the transmission information from the first centralized processing device of the network, wherein the transmission information has undergone the network service protocol processing;
decapsulating, by a base station, the transmission information to obtain digital information;
performing, by a base station, baseband processing, intermediate frequency processing, and radio frequency processing for the digital information to obtain a signal; and
sending, by a base station, the signal to the mobile terminal through the antenna.

2. The method according to claim 1, further comprising:
controlling, by a second centralized processing device of the network, service adaptation between the base station and a core network, and/or service isolation, and/or service forwarding.

3. The method according to claim 1 or claim 2, wherein:
the first centralized processing device and the second centralized processing device are a same device or different devices in the network;
the first centralized processing device is a broadband remote access server, BRAS, a metropolitan area Ethernet network element, an optical line terminal, OLT, a multiple services transition platform, MSTP, a broadband access device, an integrated access device, or a digital subscriber line access multiplexer; and
the second centralized processing device is a BRAS, a metropolitan area Ethernet network element, an OLT or an MSTP, a broadband access device, an integrated access device, or a digital subscriber line access multiplexer.

4. The method according to claim 1, wherein the performing, by the base station, the physical-layer interface adaptation for the encapsulated information to obtain the transmission information comprises:
performing, by the base station, physical-layer interface adaptation for the encapsulated information to obtain E1 interface transmission information, or fast Ethernet, FE, interface transmission information, or Asymmetric Digital Subscriber Line, ADSL, interface transmission information, or passive optical network, PON, interface transmission information.

5. A data communication method, comprising:
receiving, by a first centralized processing device, transmission information sent by a base station;
performing, by a first centralized processing device, network service protocol processing for the transmission information;
sending, by a first centralized processing device, the information, which has undergone the network service protocol processing, to a network side;
and/or,
receiving, by a first centralized processing device, information sent by the network side;
performing, by a first centralized processing device, the network service protocol processing for the information; and
sending, by a first centralized processing device, the transmission information, which has undergone the network service protocol processing, to the base station.

6. The method according to claim 5, further comprising:
controlling, by a second centralized processing device of the network, service adaptation between the base station and a core network, and/or service isolation, and/or service forwarding.

7. The method according to claim 5 or claim 6, wherein:
the first centralized processing device and the second centralized processing device are a same device or different devices in the network;
the first centralized processing device is a BRAS, a metropolitan area Ethernet network element, an OLT or an MSTP, a broadband access device, an integrated access device, or a digital subscriber line access multiplexer; and
the second centralized processing device is a BRAS, a metropolitan area Ethernet network element, an OLT or an MSTP, a broadband access device, an integrated access device, or a digital subscriber line access multiplexer.

8. The method according to claim 5, wherein the network service protocol processing comprises:
processing protocols on a data link layer, network layer, transmission layer, session layer, representation layer, and application layer.

9. A data communication system, comprising:
a base station, configured to: receive, through an antenna, a signal sent by a mobile terminal, perform intermediate frequency processing, radio frequency processing and baseband processing for the signal to obtain digital information; encapsulate the digital information to obtain encapsulated information, perform physical-layer interface adaptation for the encapsulated information to obtain transmission information, and send the transmission information to a first centralized processing device of a network; and/or receive the transmission information from the first centralized processing device, wherein the transmission information has undergone the network service protocol processing, decapsulate the transmission information to obtain digital information; perform baseband processing, intermediate frequency processing, and radio frequency processing for the digital information to obtain a signal, and send the signal to the mobile terminal through the antenna; and
a first centralized processing device, configured to: receive the transmission information sent by the base station, perform network service protocol processing for the transmission information, and send the information, which has undergone the network service protocol processing, to the network side ; and/or receive the information sent by the network side, perform the network service protocol processing for the information, and send the transmission information, which has undergone the network service protocol processing, to the base station.

10. The data communication system according to claim 9, further comprising:
a second centralized processing device, configured to control service adaptation between the base station and a core network, service isolation, and service forwarding.

11. The data communication system according to claim 10, wherein: the second centralized processing device and the first centralized processing device are a same device or different devices in the network;
the first centralized processing device is a BRAS, a metropolitan area Ethernet network element, an OLT or an MSTP, a broadband access device, an integrated access device, or a digital subscriber line access multiplexer; and
the second centralized processing device is a BRAS, a metropolitan area Ethernet network element, an OLT or an MSTP, a broadband access device, an integrated access device, or a digital subscriber line access multiplexer.

12. A base station, comprising:
an antenna, configured to receive a signal sent by a mobile terminal;
an intermediate-frequency, radio-frequency and baseband processing module, configured to perform intermediate frequency processing, radio frequency processing and baseband processing for the signal to obtain digital information;
an encapsulating module, configured to encapsulate the digital information to obtain encapsulated information; and
an adapting module, configured to perform physical-layer interface adaptation for the encapsulated information to obtain transmission information, and send the transmission information to a first centralized processing device of a network so that the centralized processing device performs network service protocol processing for the transmission information.

13. A base station, comprising:
a transmission module, configured to receive transmission information from a first centralized processing device of a network, wherein the transmission information has undergone network service protocol processing;
an encapsulating module, configured to decapsulate the transmission information, which has undergone the network service protocol processing, to obtain digital information;
an intermediate-frequency, radio-frequency and baseband processing module, configured to perform baseband processing, intermediate frequency processing, and radio frequency processing for the digital information to obtain a signal; and
an antenna, configured to send the signal to a mobile terminal.

14. A network device, comprising:
a receiving module, configured to receive transmission information sent by a base station, wherein the transmission information is obtained through physical-layer interface adaptation performed by the base station;
a protocol processing module, configured to perform network service protocol processing for the transmission information;
a sending module, configured to send the information, which has undergone the network service protocol processing, to a network side; or
a receiving module, configured to receive information sent by the network side;
a protocol processing module, configured to perform network service protocol processing for the information; and
a sending module, configured to send the transmission information, which has undergone the network service protocol processing, to the base station.

15. The network device according to claim 14, further comprising:
a control-plane processing module, configured to process control-plane data of a radio network controller;
and/or,
a user-plane processing module, configured to process user-plane radio frames of the radio network controller.
